# EUROPEAN PATENT SPECIFICATION

(11) **EP 1 325 550 B1**
(45) Date of publication and mention of the grant of the patent: **31.03.2010**
(21) Application number: 01972880.7
(22) Date of filing: 04.10.2001
(51) Int. Cl.: H02M 7/48

(54) **A METHOD FOR CONTROLLING A VSC-CONVERTER AND A VSC-CONVERTER**
VERFAHREN ZUR STEUERUNG EINES SPANNUNGSGESPEISTEN UMRICHTERS UND SPANNUNGSGESPEISTER UMRICHTER
PROCEDE DE COMMANDE DE CONVERTISSEUR DE SOURCE DE TENSION ET CONVERTISSEUR DE SOURCE DE TENSION

(30) Priority: 11.10.2000 SE 0003657
(43) Date of publication of application: 09.07.2003
(73) Proprietor: ABB AB, 721 83 Västerås (SE)
(72) Inventor: BIJLENGA, Bo, S-662 33 Åmål (SE); STERGIOPOULOS, Fotis, GR-593 00 Alexandria (GR); ASPLUND, Gunnar, S-771 32 Ludvika (SE)
(74) Representative: Dahlstrand, Björn
(86) International application number: PCT/SE2001/002146
(87) International publication number: WO 2002/031956

(56) References cited:
- WO-A1-99/40676
- US-A- 4 432 032
- US-A- 5 621 634
- US-A- 5 684 688

## Description

### FIELD OF THE INVENTION AND PRIOR ART

The present invention relates to a method for controlling a VSC-converter for converting alternating voltage into direct voltage and conversely, which comprises a series connection of four units arranged between two poles, a positive and a negative, of a direct voltage side of the converter, each unit comprising a semiconductor device of turn-off type and a diode connected in anti-parallel therewith and being given an order number according to the order thereof in the series connection from the positive to the negative pole, an alternating voltage phase line connected to a first midpoint, called phase output, of the series connection between the second and the third unit, means adapted to provide a midpoint on said direct voltage side between the two poles and put these poles on the same voltage but with opposite signs with respect to the midpoint of the direct voltage side, in which a second midpoint of the series connection between the first and second unit is through a fifth said unit with a diode with the conducting direction with respect to the phase output opposite to the conducting direction of the diode of the second unit connected to the midpoint of the direct voltage side and a third midpoint of the series connection between the third and fourth unit is through a sixth said unit with a diode with the conducting direction with respect to the phase output opposite to that of the diode of the third unit connected to the midpoint of the direct voltage side, in which the semiconductor devices of the units are controlled to be turned on and turned off so that the alternating voltage phase line is alternatively connected to the midpoint, the plus pole and the minus pole of the direct voltage side for generating a train of pulses with determined amplitudes according to a pulse width modulation pattern on the phase output of the converter, in which the midpoint of the direct voltage side is connectable to the phase output through two different so called zero states, namely a first one in which the second and the fifth unit are in the conducting state, and a second one, in which the third and the sixth unit are in the conducting state, as well as a converter for converting alternating voltage into direct voltage and conversely according to the preamble of the appended device claim.

Thus, the invention relates to conversion of alternating voltage into direct voltage and conversely by utilizing a so-called three level converter of VSC-type (Voltage Source Converter). Such may be used in all types of situations, where direct voltage is to be converted to alternating voltage and conversely, in which examples of such uses are in stations of HVDC-plants (High Voltage Direct Current), in which the direct voltage is normally converted into a three phase alternating voltage or conversely, or in so called back-to-back-stations where the alternating voltage is firstly converted into direct voltage and the latter then into alternating voltage, as well as in SVC's (Static Var Compensator), where the direct voltage side consists of one or more capacitors hanging freely. The alternating current side of the converter could also be connected to an alternating current motor for driving this or to an alternating current generator.

The invention is not restricted to any particular voltage levels of the direct voltage side or magnitude of power to be handled. The formers are advantageously within the interval 1-500 kV.

An advantage of using three level converters instead of two level bridges is that considerably lower frequencies for switching the semiconductor devices of the units according to the pulse width modulation pattern may be used for obtaining a curve shape of the alternating voltage side of a certain quality. The switching losses may hereby be reduced considerably, so that it also gets possible to transfer higher powers through such a three level converter than through a two level bridge, since higher conduction losses may be accepted. Harmonics generated through the pulse width modulation pattern are at the same time reduced.

A three level converter already known is a so-called NPC (Neutral Point Clamped)-converter, in which said fifth and sixth units are replaced by a clamping diode. A disadvantage of such a NPC-converter is that the switching losses will not be distributed evenly on the semiconductor device of the different units (the current valves), but in the case of transferring active power, either by the fact that the converter operates as rectifier or inverter, the switching losses will mainly be generated in the semiconductor devices in the two inner units of the series connection in the rectifier case and the outer ones in the inverter case, i.e. the first and the fourth unit, while when transferring reactive power the great part of the switching and conduction losses will be generated in the semiconductor devices of the two inner units, i.e. the second and the third unit. This means that in a given operation mode some of the semiconductor devices will operate far away from their thermal limit, while other are very close thereto, which restricts the power that may be handled by the converter to an unnecessary extent.

A method and a converter of the type defined in the introduction are already known through the PCT application WO 99/40676 of the applicant. The method described therein constitutes a suggestion to a solution to the problem just mentioned of high switching losses restricting the maximum transferable power through such a converter. The semiconductor devices in the second and third unit, i.e. the units closest to the phase output, are in that method controlled to be turned on and turned off with a considerably higher frequency than the semiconductor devices of the other four units. Since different demands are put on the different semiconductor devices depending upon in which units they are located, they may in such a converter with such a control method be specially designed, so that in the second and third unit semiconductor devices are used which may take higher frequencies especially well, while in the other units semiconductor devices having low conduction losses are advantageously used. It is hereby possible to reduce the total losses in such a converter, especially the total switching losses in the semiconductor devices. Even if such a control method already known is advantageous it requires a special design of the semiconductor devices.

The term "voltage set point" is used throughout the description in the meaning of and synomymously to the term "reference voltage."

### SUMMARY OF THE INVENTION

An object of the present invention is to provide a method and a converter of the type defined in the introduction, which make it possible if desired to use substantially identical semiconductor devices in all six units and substantially identical units but obtain a possibility to transfer considerably higher powers, especially when there is a need to use a pulse width modulation pattern with a high pulse frequency, than in a conventional NPC-converter with semiconductor devices of a similar type in the four units thereof. Thus, the invention aims at proposing an advantageous way to utilize the converter with the construction according to the PCT application mentioned above for converting alternating voltage into direct voltage and conversely.

This object is according to the invention obtained by providing a method of the type defined in the introduction, in which the semiconductor devices of the units are controlled so that both zero states are each assumed at least once during a half period during which the fundamental frequency component of the voltage set value of the phase output is positive or negative. It gets hereby possible to distribute the losses more evenly over at least four of the six units, and the zero state may be changed when desired for obtaining an even distribution of primarily the switching losses, but preferably the sum of the switching and conduction losses on the semiconductor devices of said four units. The semiconductor devices of the remaining two units have normally lower losses than the other four. This constitutes also preferred embodiments of the invention, in which in the case of high switching frequencies, i.e. when the switching losses are dominating, it may be sufficient to distribute the switching losses substantially evenly on the semiconductor devices, but in the case when the conduction losses have a significant importance it is desired to distribute the sum of the switching and conduction losses evenly on the semiconductor devices of the units. It is pointed out that the total losses in the semiconductor devices will be essentially the same as in a conventional NPC-converter, but they will through the method according to the invention be distributed considerably more evenly on the different semiconductor devices, so that it gets possible to transfer a higher power through the converter device controlled according to the method according to the invention without overloading any individual semiconductor device. According to another preferred embodiment of the invention being directed to reactive operation the semiconductor devices of the units are controlled for obtaining said alternative connections to the phase output according to a pattern aiming at reducing the sum of the switching and conduction losses in the semiconductor devices of turn-off type in the second and third unit. The total losses in these semiconductor devices may hereby be reduced with respect to the case of a conventional NPC-converter, so that the current handling ability of the converter may be increased.

According to a preferred embodiment of the invention, within each said half period of the voltage set value of the phase output substantially each time the midpoint of the direct voltage side is to be connected to the phase output the opposite zero state to the one just before is selected. In rectifier and inverter operation a substantially even distribution of the switching losses in the semiconductor devices of turn-off type in the semiconductor devices in four of the six units may hereby take place. In a corresponding way a substantially even distribution of the switching losses in the diode part in the semiconductor devices of four of the six units results in the corresponding way.

According to another preferred embodiment of the invention the semiconductor devices of the units are controlled so that a change between the two zero states is always separated by a connection of the plus or minus pole of the direct voltage side to the phase output. It may hereby be ensured that no extra commutations take place during the dead time that could result if it were changed from one zero state to the other.

According to another preferred embodiment of the invention each time the midpoint of the direct voltage side is to be connected to the phase output the semiconductor devices in the second and fifth unit as well as those in the third and sixth unit are turned on for simultaneously obtaining both zero states. Thus, the invention also comprises a possibility to select both zero states simultaneously, in which the current then may chose the way it "wants". This way of selecting both zero states simultaneously reduces the number of possible states and may hereby simplify the control of the converter. It is pointed out that "turned on" also comprises "leave turned on", i.e. the semiconductor devices of any or some of the units mentioned could be turned on already before the midpoint of the direct voltage side is connected to the phase output.

According to another preferred embodiment of the invention the semiconductor devices of the units are controlled so that a change between connecting the plus and the minus pole to the phase output is always separated by the connection of the midpoint of the direct voltage side according to one of the zero states to the phase output. High switching losses and high voltage jumps otherwise generated on the phase output are hereby avoided. It is then also possible that both zero states are obtained simultaneously according to the previous embodiment.

According to another preferred embodiment of the invention the semiconductor devices of the units are controlled to together alternatively assume four different states, namely a first state for connecting the plus pole of the direct voltage side to the phase output, a second state for connecting the minus pole of the direct voltage side to the phase output and a third and fourth state for connecting the midpoint of the direct voltage to the phase output. By only utilizing four different states of the semiconductor devices of the units, i.e. four different combinations of semiconductor devices turned on and turned off, the very method for controlling the semiconductor devices gets very simple. It is pointed out that in the practice a fifth possible state of course exists in this embodiment, namely when the converter is out of operation and then all the semiconductor devices are turned off. It is here possible to select different combinations for obtaining the first and the second state, in which for obtaining the first state the units 1 and 2 have to be conducting and for obtaining the second state the units 3 and 4 have to be conducting.

By controlling the semiconductor devices of the first and sixth unit in another preferred embodiment of the invention to always assume the same state, turned on or turned off, and the semiconductor devices in the fourth and fifth unit to always assume the same state, turned on or turned off, it will be possible to use the same control signal for the semiconductor devices in the first and sixth unit and in the fourth and fifth unit, respectively, so that it is in the practice sufficient with four control signals for controlling the sixth units.

According to another preferred embodiment of the invention the semiconductor devices in the first and sixth unit are interlocked with respect to the semiconductor devices in the fourth and fifth unit, so that when the semiconductor devices in any of these unit couples is to be turned on the semiconductor devices of the other unit couple is firstly controlled to be turned off. An undesired fast discharging of any of the capacitors of the DC-side through the first and fifth unit or alternatively through the sixth and fourth unit is hereby prevented. According to another preferred embodiment of the invention the semiconductor devices in the second unit is in a corresponding way interlocked with respect to those in the third unit, in which it is in the same way prevented that an undesired fast discharging of one of the capacitors of the DC-side takes place through either the first, second, third and sixth unit or through the fifth, second, third and fourth unit.

According to another preferred embodiment of the invention are during a first period of time located on both sides of a zero-crossing of the fundamental frequency component of the phase current on the phase output changes between connection of the plus pole and the minus pole, respectively, to the phase output and a zero state thereof carried out so that a large current commutation loop is obtained, and during a second period of time between such first periods of time with a higher absolute value of the phase current the changes last mentioned are carried out so that a small current commutation loop is obtained. The total losses in the converter device may in this way be reduced, since the commutation inductance is kept low when the current intensity is high and a higher inductance is allowed when the current intensity is low, while maintaining the possibility to distribute the switching losses substantially evenly on the semiconductor devices of the different units.

According to preferred embodiments of the invention the first period is in rectifier or inverter operation of the converter selected to extend over a phase angle of the phase current of 50-65°, preferably 55-60°, on each side of said zero-crossing, while the first period is in operation of the converter for transferring mainly reactive power selected to extend over a phase angle of the phase current of 25-45°, preferably 30-35°, on each side of said zero-crossing. It has been found that to the selecting of such a first and second period the maximum power transferable through the converter is increased.

The invention also relates to an apparatus, a computer program and a computer program product according to the corresponding appended claims. It is easily understood that the method according to the invention defined in the appended set of method claims is well suited to be carried out through program instructions from a processor that may be influenced by a computer program provided with the program steps in question. Although not explicitly expressed in patent claims the invention also comprises such apparatuses, computer programs and computer program products combined with a method according to any of the appended method claims.

Further advantages as well as advantageous features of the invention appear from the following description and the other dependent claims.

### BRIEF DESCRIPTION OF THE DRAWINGS

With reference to the appended drawings, below follows a description of preferred embodiments of the invention cited as examples.

In the drawings:
Fig 1 illustrates schematically a converter apparatus of three-level-type of the kind, to which the method according to the invention is applicable,
Fig 2 illustrates schematically how a pulse width modulation pattern is applied on the phase output of a converter according to Fig 1,
Fig 3 is a simplified block diagram illustrating the principle for controlling a converter according to Fig 1 according to the present invention,
Fig 4 illustrates the development of the phase current on the phase output of a converter according to Fig 1 and how according to a preferred embodiment of the invention different control schemes are selected during different periods of time, and
Fig 5 is a diagram illustrating the maximum transferable active and reactive power through a converter according to Fig 1, for methods according to different embodiments of the invention.

### DETAILED DESCRIPTION OF PREFERRED EMBODIMENTS OF THE INVENTION

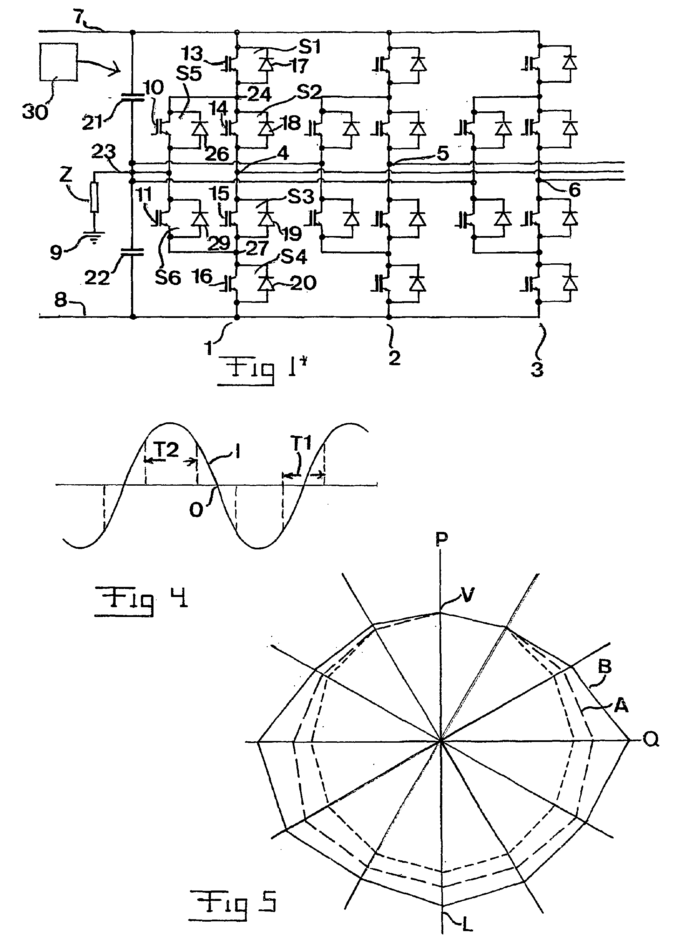

The construction of a three-level-converter of the type described in the PCT application WO 99/40676 mentioned above, of the applicant is illustrated in Fig 1. It is here illustrated how the converter has three so called phase legs 1-3 with a phase output 4-6 each for connecting the alternating voltage side of the converter through a reactor and/or a transformer to a three phase alternating voltage network, but only one of these phase legs will hereinafter be discussed. It is also completely possible that the converter is connected to a one phase alternating voltage network or the alternating voltage side may except from the AC-network be connected to a generator or a motor. The converter is a so called VSC-converter, which has a series connection of four units S1-S4 arranged between two poles, a positive 7 and a negative 8, of a direct voltage side of the converter, each said unit comprising a semiconductor device 13-16 of turn-off type and a diode 17-20 connected in anti-parallel therewith and are given order numbers according to the order thereof in the series connection from the positive to the negative pole.

Two capacitors 21, 22 connected in series are arranged between said two poles, and a dc point 23 (the midpoint of the direct voltage side) between these (which it normally the case) is connected to ground 9 through an impedance Z, in which this impedance may vary from zero (= direct grounding of the midpoint of the direct voltage side) to a value X (= impedance grounding of the midpoint of the direct voltage side, through for example a resistance R and an inductance L) up to a value Xₘₐₓ (= non-grounded midpoint, where the grounding is only determined by stray capacitances between the midpoint of the direct voltage side and the ground), so that the potentials +U/2 and -U/2 are in this way provided at the respective pole, in which U is the voltage between the two poles 7, 8.

A second midpoint 24 of the series connection between the first and second unit is through a fifth unit S5 with the diode 26 with the conducting direction with respect to the phase output 4 opposite to the conducting direction of the diode of the second unit connected to the midpoint of the direct voltage side and a third midpoint 27 of the series connection between the third and fourth unit is through a sixth said unit S6 with the diode 29 with the conducing direction with respect to the phase output opposite to the diode of the third unit connected to the midpoint of the direct voltage side.

The semiconductor devices of turn-off type of the units S1-S6 may for example be IGBT's or GTO's. Although only one IGBT or GTO per unit has been shown this may stand for a number of IGBT's or GTO's connected in series and controlled simultaneously, which is also normally the case, since a comparatively high number of such semiconductor devices are required for holding the voltage to be held by each unit in the blocking state, when the direct voltage side for example has a voltage exceeding 10 kV. Each diode, a so-called freewheeling diode, shown may also stand for a number of diodes connected in series.

The semiconductor devices being parts of the converter are controlled through an arrangement 30 schematically indicated to be turned on and turned off for alternatively connecting the midpoint, the plus pole and the minus pole of the direct voltage side to the phase output of the respective phase leg for generating a train of pulses with determined amplitudes according to a pulse width modulation pattern (PWM) on the phase output. The pulse width modulation frequency is then considerably higher than, advantageously at least 5 times higher, more preferred at least 10 times as high and most preferred at least 20 times as high as the fundamental frequency of the alternating current normally substantially sinusoidal on the phase output of the converter. Thus, the pulse width modulation frequency may preferably be in the order of 1-2 kHz, while the fundamental frequency, i.e. the frequency of the fundamental component of the phase current on the phase output, is typically 50 Hz or 60 Hz. However, when the converter is connected to a generator or motor the frequency of the current may vary within a broad range.

The converter apparatus may be operated in different ways, such as for transferring active power as rectifier or as inverter, or for transferring reactive power, or for transferring a combination of active and reactive power.

The midpoint 23 of the direct voltage side is connectable to the phase output 4 through two different so called zero states, namely a first one, in which the second S2 and the fifth S5 unit are in the conducting state, and a second, in which the third S3 and the sixth S6 unit are in the conducting state. The invention relates to a method utilizing this option of different zero states for controlling the converter so that preferably the sum of the switching and conduction losses is distributed more evenly over the semiconductor devices of four of the six units, and how such a control may take place according to preferred embodiments of the invention will now be described.

According to a first very preferred embodiment of the invention the semiconductor devices of the units S1-S6 are controlled according to the following scheme:

| | S1, S6 | S2 | S3 | S4, S5 |
|---|---|---|---|---|
| + | 1 | 1 | 0 | 0 |
| N1 | 0 | 1 | 0 | 1 |
| N2 | 1 | 0 | 1 | 0 |
| - | 0 | 0 | 1 | 1 |

Thus, the semiconductor devices of the units are controlled to together alternatively assume four different states, namely a first state (+) for connecting the plus pole of the direct voltage side to the phase output, a second state (-) for connecting the minus pole of the direct voltage side to the phase output and a third (N1) and a fourth (N2) state for connecting the midpoint of the direct voltage side to the phase output. The first and the sixth unit are then controlled to always assume the same state, turned on or turned off, and the semiconductor devices in the fourth and fifth unit are controlled to always assume the same state, turned on or turned off. This means that the semiconductor devices of the first and sixth unit may be controlled through one and the same control signal, and the same is valid for the semiconductor devices of the fourth and fifth unit. According to a very simple embodiment of the invention every second time it is switched between on one hand the positive or negative potential on the phase output and on the other a zero potential thereon the third state is selected as zero state and every second time the fourth state is selected as zero state, which in rectifier and inverter operation results in a more even distribution of the sum of the losses on the semiconductor devices of the different units, so that the phase current may be increased with respect to a conventional three-level converter of NPC-type before the thermal limit is reached for any semiconductor device and by that a higher power may be handled by the converter.

It is through this control scheme very easy to avoid through-turn on by making an interlocking between the unit couples S1, S6 and S4, S5, so that the semiconductor devices of opposite units have turn-off signals before the semiconductor devices to be turned on receive a turn-on signal. Should such an interlocking not be present and for example S1, S6 be turned on before S4, S5 are turned off when changing from the third state to the first state, the capacitors 21 and 22 will then briefly be short-circuited and high short-circuit currents occur. An interlocking is also made between the second unit S2 and the third unit S3, so that the semiconductor devices of one of these units have a turn-off signal before the semiconductor devices of the other of these units to be turned on receives a turn-on signal. Should namely such an interlocking not be present and for example S2 be turned on before S3 is turned off when changing from the third to the second state, the capacitor 22 will be briefly shortcircuited and high short-circuit currents occur.

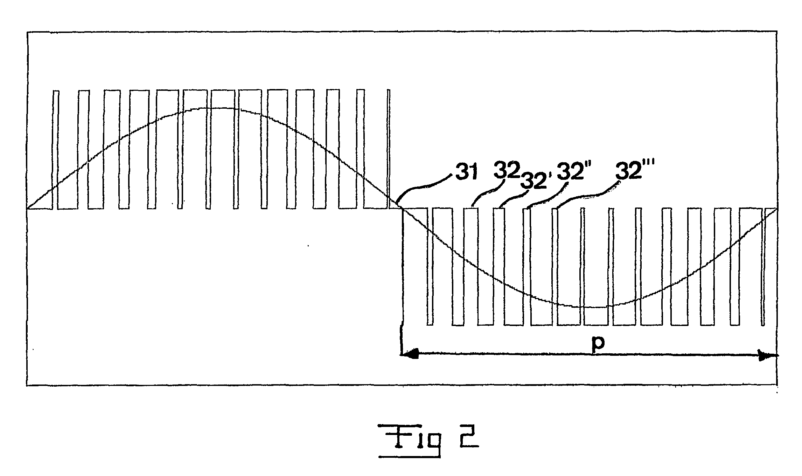

It is illustrated in Fig 2 what a pulse width modulation pattern may typically look like for a converter of the type shown in Fig 1. The sinus curve 31 shown is then the voltage set value on the phase output 4 of the converter, while it appears that when said set value is positive the plus pole of the direct voltage side and the midpoint 23 thereof are alternatively connected to the phase output, i.e. positive pulses and zero pulses with a varying width are alternating, while when said set value is negative it is alternated between negative pulses and zero pulses. During a half period p with either positive or negative set value of the voltage each of said two different zero states is according to the invention assumed at least once. This means that at least one of the zero pulse 32, 32'... is due to a zero state differing from at least the one of at least one of the other zero pulses or both zero states are assumed when obtaining the different zero pulses. In the simplified embodiment of the invention described above, in which the zero states change each time, the zero pulses 32 and 32" would correspond to the same zero state, while the pulses 32' and 32"' would correspond to the same, but the other zero state.

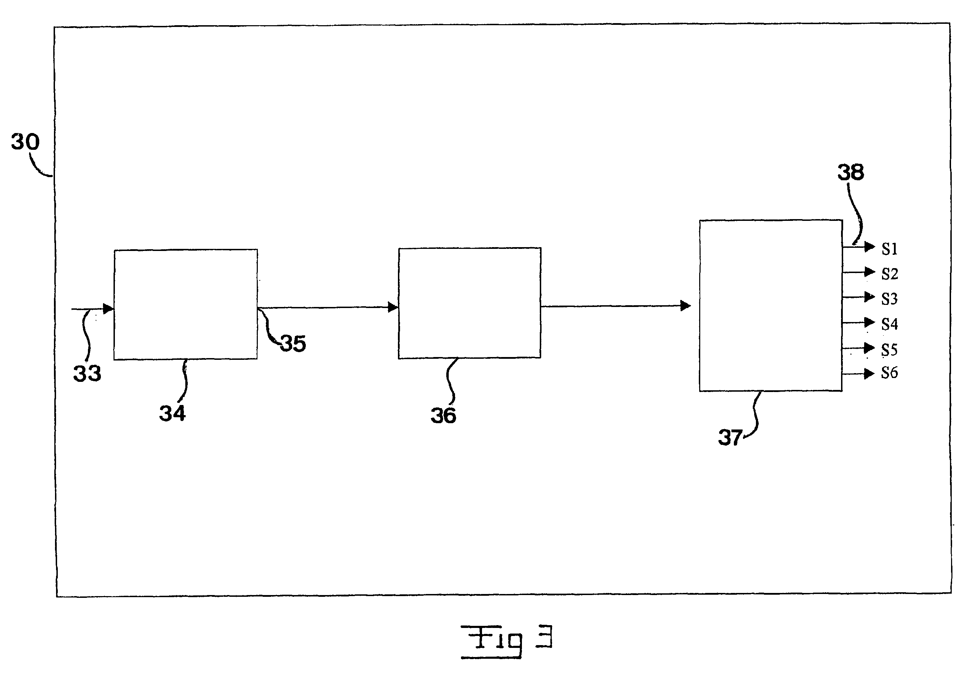

It is very schematically illustrated in Fig 3 how the control through the control arrangement 30 may in the practice be carried out. A reference value corresponding to the voltage set value of the phase output is at 33 received by a pulse width modulation generator 34, which elaborates the pulse width modulation pattern shown in Fig 2 and sends a pulse width modulation signal on the output 35 thereof, which orders a positive, a negative or a zero pulse on the phase output, to a zero state selector 36, which sends a pulse width modulation signal containing information also about which zero state is to be selected when a zero pulse shall be put on the phase output, to a means 37 for controlling the semiconductor devices of the different units S1-S6 to be turned on or turned off, which is illustrated through the six arrows 38 to the semiconductor devices.

According to another preferred embodiment of the invention it is intended to carry out changes between connecting the plus pole and the minus pole, respectively, to the phase output and a zero state thereof during a first time period T1 (see Fig 4) located on both sides of a zero-crossing 0 of the fundamental frequency component of the phase current I, so that a large current commutation loop is obtained and during a second time period T2 between such first time periods with a higher absolute value of the phase current the changes last mentioned are carried out so that a small current commutation loop is obtained. In the control scheme as above with the four different states this means that during the first time period T1 it is for a positive voltage set value of the phase output changed between the first and the fourth state and for a negative voltage set value of the phase output between the second and the third state, and during the second time period T2 it is at a positive voltage set value of the phase output changed between the first and the third and at a negative voltage set value of the phase output between the second and the fourth state. By actually changing control scheme in this way depending upon how high the fundamental frequency component of the phase current is the inductive commutation losses of the converter apparatus may be kept down, since the large commutation loop is only used when the current is low, but an even distribution of the sum of the losses during a half period of the fundamental component of the phase current on the semiconductor devices of the different units may nevertheless take place. The losses may in this way be reduced somewhat further with respect to the simplified control scheme described above, since the large commutation loop is sometimes also selected for high currents. Thus, starting from a connection of the plus pole to the phase output through conduction of S1 and S2 a small commutation loop is for example obtained when subsequently the midpoint 23 is connected to the phase output to S5 and S2 and a large commutation loop is obtained through connection of the midpoint 23 through S6 and S3.

Besides the control scheme described there are many other control schemes able to deliver a result being just as good but are more or less complicated to achieve. An example of such a control scheme according to another embodiment of the invention for controlling a converter according to Fig 1 through eight different states is shown below, of which the states 1-4 according to a first control scheme are used during the second time period mentioned above and the fifth to the eighth state according to the second control scheme during said first time period.

**Control scheme 1**

| | S₁ | S₂ | S₃ | S₄ | S₅ | S₆ |
|---|---|---|---|---|---|---|
| + | 1 | 1 | 0 | 0 | 0 | 0 |
| N1 | 0 | 1 | 0 | 0 | 1 | 0 |
| N2 | 0 | 0 | 1 | 0 | 0 | 1 |
| - | 0 | 0 | 1 | 1 | 0 | 0 |

**Control scheme 2**

| | S1 | S2 | S3 | S4 | S5 | S6 |
|---|---|---|---|---|---|---|
| + | 1 | 1 | 0 | 0 | 0 | 1 |
| N1 | 1 | 0 | 1 | 0 | 0 | 1 |
| N2 | 0 | 1 | 0 | 1 | 1 | 0 |
| - | 0 | 0 | 1 | 1 | 1 | 0 |

It may in the following way be understood that also other control schemes may be achieved: for obtaining the +-state the first and the second unit have to be conducting, but it is optional to have the semiconductor device in the sixth unit turned on or not. Similarly the third and fourth units have to be conducting for obtaining the --state, but it does not matter if the semiconductor device of the fifth unit is turned on or not. The zero state may be obtained by having the semiconductor device of the second and fifth unit turned on, but it is then optional to have the semiconductor device in the fourth unit turned on. Likewise, another zero state may be obtained by having the semiconductor device in the third and sixth unit turned on, but it is optional to have the semiconductor device in the first unit turned on. It appears from this that many different control schemes are possible, but the control scheme described previously with only four states is easier to implement.

It is illustrated in Fig 5 in a P- (active power)- Q (reactive power)-diagram what the maximum allowed phase current looks like in different types of operation for the case of the simplified control scheme as above with change of zero state every second time (curve A) and the control scheme as above while adapting the current commutation loops to the magnitude of the phase current (curve B). Inverter operation and rectifier operation are indicated through V and L, respectively. It means in this case that when reactive power is transferred it makes the most sense to use a change between different control schemes depending upon the magnitude of the phase current. It has also turned out that the optimum phase angle for the first time period is about ±30° from the zero-crossing of the fundamental component of the phase current at reactive current and about ±60° from the zero-crossing of the fundamental component of the phase current at active current, and it is accordingly advantageous to be located between these values at active and reactive current for obtaining a distribution of losses being as even as possible on the semiconductor devices of the different units.

Calculations have shown that the phase current may typically increase by a factor of 1.3-1.5 by using the methods according to the embodiments of the invention described above in comparison with the current thermally limited allowed in a corresponding NPC-converter. This factor is strongly depending upon the proportion of the switching losses with respect to the conduction losses. However, also the conduction losses are by this control method redistributed in an advantageous way.

The invention is of course not restricted to the preferred embodiments described above, many possibilities to modifications thereof will be apparent to a person with skill in the art without departing from the invention as defined in the claims.

Many other possibilities to control schemes utilizing the basic idea of the invention will be apparent to persons with skill in the art.

It is pointed out that in the case of a voltage set value being non-sinusoidal a plurality of changes of the sign of the voltage set value may occur during a half period of the fundamental frequency component of the phase current, and this is the reason for relating the half period in the independent patent claim also with respect to the time length thereof to said fundamental frequency component, since it is during this half period the two zero states have to be assumed at least once each.

## Claims

1. A method for controlling a VSC-converter for converting alternating voltage into direct voltage and conversely, which converter comprises
• a series connection of four units (S1-S4) arranged between two poles, a positive (7) and a negative (8), of the direct voltage side of the converter, each unit comprising a semiconductor device of turn-off type (13-16) and a diode (17-20) connected in anti-parallel therewith, the units being given an order number according to the order thereof in the series connection from the positive (7) to the negative (8) pole,
• an alternating voltage phase line connected to a first midpoint, called phase output (4), of the series connection between the second (S2) and the third (S3) unit,
• means (9) adapted to provide a dc midpoint (23) on said direct voltage side between the two poles and to put these poles on the same voltage but with opposite signs with respect to the dc midpoint (23),
in which converter
• a second midpoint (24). located between the first (S1) and second (S2) unit, is connected to the dc midpoint (23) through a fifth unit (S5) having a diode (26) with the conducting direction with respect to the phase output (4) opposite to the conducting direction of the diode of the second unit (S2) and
• a third midpoint (27), located between the third (S3) and fourth (S4) unit, is connected to the dc midpoint (23) through a sixth unit (S6) having a diode (29) with the conducting direction with respect to the phase output (4) opposite to that of the diode of the third unit (S3),
in which converter the semiconductor devices of the units (S1-S6) are controlled to be turned on and turned off so that the alternating voltage phase line is alternatively connected to the dc midpoint (23), the positive pole (7) and the negative pole (8) for generating a train of pulses with determined amplitudes according to a pulse width modulation pattern on the phase output (4) of the converter,
in which the dc midpoint (23) is connectable to the phase output (4) through two different so called zero states, namely a first zero state in which the second (S2) and the fifth unit (S5) are in the conducting state, and a second zero state, in which the third (S3) and the sixth unit (S6) are in the conducting state, ***characterized* in that** the semiconductor devices of the units (S1-S6) are controlled so that each of both zero states is assumed at least once during a half period during which the fundamental frequency component of a reference voltage of the phase output (4) is positive or negative.

2. A method according to claim 1, ***characterized* in that** the semiconductor devices of the units (S1-S6) are controlled for obtaining said alternative connections to the phase output (4) according to a pattern which in operation as rectifier or inverter distributes the switching losses substantially evenly on the semiconductor devices of turn-off type of at least four of the sixth units.

3. A method according to claim 1, ***characterized* in that** the semiconductor devices of the units (S1-S6) are controlled for obtaining said alternative connections to the phase output (4) according to a pattern that in operation as rectifier or inverter distributes the sum of the switching and the conduction losses substantially evenly on the semiconductor devices of turn-off type of at least four of the sixth units.

4. A method according to claim 1, ***characterized* in that** the semiconductor devices of the units (S1-S6) are controlled for obtaining said alternative connections to the phase output (4) according to a pattern, which in reactive operation aims at reducing the sum of the switching and conduction losses in the semiconductor device of turn-off type of the second and third unit.

5. A method according to any of claims 1-4, ***characterized* in that** within each said half period of the fundamental frequency component of the reference voltage of the phase output (4) more than a third of the times the dc midpoint (23) is to be connected to the phase output (4), the zero state being opposite to the preceding zero state is selected.

6. A method according to any of claims 1-4, ***characterized* in that** within each said half period of the fundamental frequency component of the reference voltage of the phase output (4) substantially each time the dc midpoint (23) is to be connected to the phase output (4), the zero state being opposite to the preceding zero state is selected.

7. A method according to any of claims 1-6, ***characterized* in that** the semiconductor devices of the units are controlled so that a change between the two zero states is always separated by a connection of the positive or negative pole to the phase output.

8. A method according to any of claims 1-3, ***characterized* in that** at least one time during each said half period of the fundamental frequency component of the reference voltage of the phase output when the dc midpoint (23) is to be connected to the phase output, the semiconductor devices in the second and the fifth unit (S2, S5) as well as those in the third and sixth unit (S3, S6) are turned on for simultaneously obtaining both zero states.

9. A method according to claim 8, ***characterized* in that** each time the dc midpoint (23) is to be connected to the phase output, the semiconductor devices in the second and fifth unit (S2, S5) as well as those in the third and sixth unit (S3, S6) are turned on for simultaneously obtaining both zero states.

10. A method according to any of claims 1-9, ***characterized* in that** the semiconductor devices of the units are controlled so that a change between connecting the positive and negative pole to the phase output is always separated by a connection of the dc midpoint to the phase output according to one of the zero states.

11. A method according to claim 10, ***characterized* in that** the semiconductor devices of the units (S1-S6) are controlled to together alternatively assume four different states, namely a first state for connecting the positive pole to the phase output, a second state for connecting the negative pole to the phase output and a third and fourth state for connecting the dc midpoint to the phase output.

12. A method according to claim 11, ***characterized* in that** the semiconductor devices of the first (S1) and the sixth (S6) unit are controlled to always assume the same state, turned on or turned off, and that the semiconductor devices in the fourth (S4) and the fifth (S5) unit are controlled to always assume the same state, turned on or turned off.

13. A method according to claim 12, ***characterized* in that** the semiconductor devices of the first and the sixth unit are controlled by sending the same control signal thereto and those of the fourth and the fifth unit are controlled by sending the same control signal thereto.

14. A method according to any of claims 1-13, ***characterized* in that** the first state is obtained by controlling the semiconductor devices in the first, second and sixth unit (S1, S2, S6) to be turned on and those in the third, fourth and fifth unit (S3, S4, S5) to be turned off, the second state by controlling the semiconductor devices in the third, fourth and fifth unit to be turned on and those in the first, second and sixth unit to be turned off, the third state by controlling the semiconductor devices in the second, fourth and fifth unit to be turned on and those in the first, third and sixth unit to be turned off, and the fourth state by controlling the semiconductor devices in the first, third and sixth unit to be turned on and those in the second, fourth and fifth unit to be turned off.

15. A method according to any of claims 11-14, ***characterized* in that** the semiconductor devices in the first (S1) and the sixth (S6) unit are interlocked with respect to the semiconductor devices in the fourth (S4) and fifth (S5) unit, so that when the semiconductor devices of any of these couples of units is to be turned on the semiconductor devices of the other couple of units are firstly controlled to be turned off.

16. A method according to any of claims 11-15, ***characterized* in that** the semiconductor devices in the second unit (S2) are interlocked with respect to the semiconductor devices in the third unit (S3), so that when the semiconductor devices of any of these units are to be tuned on the semiconductor devices of the opposite of these two units are firstly controlled to be turned off.

17. A method according to claim 1, ***characterized* in that** the semiconductor devices of the units are controlled to together alternatively assume eight different states, namely four states according to a first control scheme in the form of a first state for connecting the positive pole to the phase output, a second state for connecting the negative pole to the phase output and a third (N1) and a fourth (N2) state for connecting the dc midpoint (23) to the phase output, as well as four states according to a second control scheme in the form of a fifth state for connecting the positive pole to the phase output, a sixth state for connecting the negative pole to the phase output and a seventh (N1) and an eighth state (N2) for connecting the dc midpoint to the phase output.

18. A method according to claim 17, ***characterized* in that**
• in the first state the semiconductor devices are controlled in the first (S1) and the second (S2) units to be turned on and those in the third (S3), fourth (S4), fifth (S5) and sixth (S6) units to be turned off,
• in the second state the semiconductor devices are controlled in the third and fourth unit to be turned on and those in the first, second, fifth and sixth unit to be turned off,
• in the third state the semiconductor devices are controlled in the second and fifth unit to be turned on and those in the first, third, fourth and sixth unit to be turned off,
• in the fourth state the semiconductor devices are controlled in the third and sixth unit to be turned on and those in the first, second, fourth and fifth unit to be turned off,
• in the fifth state the semiconductor devices are controlled in the first, second and sixth unit to be turned on and those in the third, fourth and fifth unit to be turned off,
• in the sixth state the semiconductor devices are controlled in the third, fourth and fifth unit to be turned on and those in the first, second and sixth unit to be turned off,
• in the seventh state the semiconductor device are controlled in the first, third and sixth unit to be turned on and those in the second, fourth and fifth unit to be turned off, and
• in the eighth state the semiconductor devices are controlled in the second, fourth and fifth unit to be turned on and those in the first, third and sixth unit to be turned off.

19. A method according to any of claims 8-18, ***characterized* in that** during a first period of time (T1) located on both sides of a zero-crossing (0) of the fundamental frequency component of the phase current (I) on the phase output (4), changes between connection of the positive pole and the negative pole, respectively, to the phase output and a zero state thereof are carried out so that a large current commutation loop is obtained, and during a second period of time (T2) between such first periods of time with a higher absolute value of the phase current the changes last mentioned are carried out so that a small current commutation loop is obtained.

20. A method according to claim 19, ***characterized* in that** in a rectifier or inverter operation of the converter the first period (T1) is selected to extend over a phase angle of the fundamental frequency component of the phase current of 50-65°, preferably 55-60°, on each side of said zero-crossing.

21. A method according to claim 19, ***characterized* in that** in operation of the converter for transferring mainly reactive power the first period (T1) is selected to extend over a phase angle of the fundamental frequency component of the phase current of 25-40°, preferably 30-35°, on each side of said zero-crossing.

22. A method according to claims 11 and 19, ***characterized* in that** during the first period of time (T1) it is changed between the first and fourth state when the reference voltage of the phase output is positive and between the second and third state when the reference voltage of the phase output is negative, and during the second period of time (T2) it is changed between the first and third state when the reference voltage of the phase output is positive and between the second and fourth state when the reference voltage of the phase output is negative.

23. A method according to claims 18 and 19, ***characterized* in that** during the first period of time (T1) the second control scheme is selected, according to which it is changed between the fifth, sixth, seventh and eighth state by changing between the fifth and seventh state when the phase current is positive and changing between the sixth and eighth state when the phase current is negative, and during the second period of time (T2) the first control scheme is selected, according to which it is changed between the first, second, third and fourth state by changing between the first and third state when the phase current is positive and between the second and fourth state when the phase current is negative.

24. A method according to any of the preceding claims, ***characterized* in that** it is semiconductor devices (13-16, 10, 11) in the form of IGBT's (Insulated Gate Bipolar Transistors) or GTO's (Gate Turn-Off thyristors) that are controlled to be turned on and turned off.

25. A VSC-converter for converting alternating voltage into direct voltage and conversely, which comprises
• a series connection of four units (S1-S4) arranged between two poles, a positive (7) and a negative (8), of the direct voltage side of the converter, where each unit comprises a semiconductor device (13-16) of turn-off type and a diode (17-20) connected in anti-parallel therewith and where the units are given order numbers according to the order thereof in the series connection from the positive (7) to the negative (8) pole,
• an alternating voltage phase line connected to a first midpoint, called phase output (4), of the series connection between the second (S2) and third (S3) unit,
• means (9) adapted to provide a dc midpoint (23) on said direct voltage side between the two poles and to put these poles on the same voltage but with opposite signs with respect to the dc midpoint (23),
in which converter
• a second midpoint (24) of the series connection, located between the first (S2) and second (S2) unit, is connected to the dc midpoint (23) through a fifth unit (S5) having a diode (26) with the conducting direction with respect to the phase output (4) opposite to the conducting direction of the diode of the second unit, and
• a third midpoint (27) of the series connection, located between the third (S3) and fourth (S4) unit, is connected to the dc midpoint (23) through a sixth unit (S6) having a diode with the conducting direction with respect to the phase output (4) opposite to that of the diode of the third unit (S3),
in which the converter also comprises an arrangement (30) adapted to control the semiconductor devices of the units (S1-S6) to be turned on and turned off for alternatively connecting the alternating voltage phase line to the dc midpoint (23), the positive pole (7) and the negative pole (8) for generating a train of pulses with determined amplitudes according to a pulse width modulation pattern on said phase output (4), and
in which the dc midpoint (23) is connectable to the phase output (4) through two different so called zero states, namely a first zero state, in which the second (S2) and fifth (S5) unit are in the conducting state, and a second zero state, in which the third (S3) and the sixth (S6) unit are in the conducting state, ***characterized* in that** the arrangement (30) is adapted to control the semiconductor devices of the units (S1-S6) so that each of both zero states is assumed at least once during a half period during which the fundamental frequency component of a reference voltage of the phase output (4) is positive or negative.

26. A VSC-converter according to claim 25, **characterized in that** the arrangement (30) is adapted to control the semiconductor devices of the units (S1-S6) according to any of claims 2-24.

27. An apparatus for controlling the semiconductor devices of the units (S1-S6) of a VSC-converter of claim 25 or 26, which apparatus comprises a program module comprising at least one processor adapted to carry out program instructions to control the semiconductor devices of the units according to the method of any of claims 1 to 24.

## Patentansprüche

1. Ein Verfahren zum Kontrollieren eines VSC-Konverters zum Konvertieren von Wechselspannung in Gleichspannung und umgekehrt, wobei der Konverter umfasst:
• eine Reihenverbindung von vier Einheiten (S1-S4), die zwischen zwei Polen, einem positiven (7) und einem negativen (8), der Gleichspannungsseite des Konverters angeordnet sind, wobei jede Einheit ein Halbleitergerät des Abschalttyps (13-16) und eine damit antiparallel verbundene Diode (17-20) umfasst, wobei den Einheiten eine Ordnungszahl gemäß ihrer Reihenfolge in der Reihenschaltung vom positiven (7) zum negativen (8) Pol gegeben ist,
• eine Wechselspannungsphasenleitung, die mit einem ersten Mittenpunkt, genannt Phasenausgang (4), der Reihenschaltung zwischen der zweiten (S2) und dritten (S3) Einheit verbunden ist,
• Mittel (9), eingerichtet um einen Gleichspannungsmittenpunkt (23) auf der Gleichspannungsseite zwischen den zwei Polen bereitzustellen und um diese Pole auf dieselbe Spannung aber mit unterschiedlichen Vorzeichen bezüglich des Gleichspannungsmittenpunktes (23) zu legen,
wobei in dem Konverter
• ein zweiter Mittenpunkt (24), angeordnet zwischen der ersten (S1) und der zweiten (S2) Einheit, mit dem Gleichspannungsmittenpunkt (23) durch eine fünfte Einheit (S5) verbunden ist, die eine Diode (26) mit Leitrichtung bezüglich des Phasenausgangs (4) entgegengesetzt zu der Leitrichtung der Diode der zweiten Einheit (S2) hat, und
• ein dritter Mittenpunkt (27), angeordnet zwischen der dritten (S3) und der vierten (S4) Einheit, mit dem Gleichspannungsmittenpunkt (23) durch eine sechste Einheit (S6) verbunden ist, die eine Diode (29) mit Leitrichtung bezüglich des Phasenausgangs (4) entgegengesetzt zu der Leitrichtung der Diode der dritten Einheit (S3) hat,
wobei in dem Konverter die Halbleitergeräte der Einheiten (S1-S6) kontrolliert werden, um an- und abgeschaltet zu werden, so dass die Wechselspannungsphasenleitung alternativ mit dem Gleichspannungsmittenpunkt (23), dem positiven Pol (7) und dem negativen Pol (8) verbunden wird, um einen Zug von Pulsen mit vorbestimmten Amplituden gemäß einem Pulsbreitenmodulationsmuster auf dem Phasenausgang (4) des Konverters zu erzeugen,
wobei der Gleichspannungsmittenpunkt (23) mit dem Phasenausgang (4) durch zwei verschiedene sogenannte Nullzustände verbindbar ist, nämlich einen ersten Nullzustand, in welchem die zweite (S2) und die fünfte Einheit (S5) im leitenden Zustand sind, und einen zweiten Nullzustand, in welchem die dritte (S3) und die sechste Einheit (S6) im leitenden Zustand sind, **dadurch gekennzeichnet, dass** die Halbleitergeräte der Einheiten (S1-S6) kontrolliert werden, so dass jeder der beiden Nullzustände mindestens einmal angenommen wird während einer Halbperiode, während welcher die Grundfrequenzkomponente einer Referenzspannung des Phasenausgangs (4) positiv oder negativ ist.

2. Ein Verfahren nach Anspruch 1, **dadurch gekennzeichnet, dass** die Halbleitergeräte der Einheiten (S1-S6) kontrolliert werden zum Erhalten der alternativen Verbindungen zu dem Phasenausgang (4) gemäß einem Muster, welches im Betrieb als Gleichrichter oder Invertierer die Schaltverluste im Wesentlichen gleich auf die Halbleitergeräte des Abschalttyps von mindestens vier der sechs Einheiten verteilt.

3. Ein Verfahren nach Anspruch 1, **dadurch gekennzeichnet, dass** die Halbleitergeräte der Einheiten (S1-S6) kontrolliert werden zum Erhalten der alternativen Verbindungen zu dem Phasenausgang (4) gemäß einem Muster, welches im Betrieb als Gleichrichter oder Invertierer die Summe der Schalt- und Leitungsverluste im Wesentlichen gleich auf die Halbleitergeräte des Abschalttyps von mindestens vier der sechs Einheiten verteilt.

4. Ein Verfahren nach Anspruch 1, **dadurch gekennzeichnet, dass** die Halbleitergeräte der Einheiten (S1-S6) kontrolliert werden zum Erhalten der alternativen Verbindungen zu dem Phasenausgang (4) gemäß einem Muster, welches im Blindbetrieb darauf abzielt, die Summe der Schalt- und Leitungsverluste in dem Halbleitergerät des Abschalttyps der zweiten und dritten Einheiten zu reduzieren.

5. Ein Verfahren nach einem der Ansprüche 1-4, **dadurch gekennzeichnet, dass** innerhalb jeder Halbperiode der Grundfrequenzkomponente der Referenzspannung des Phasenausgangs (4) mehr als ein Drittel der Zeiten, wenn der Gleichspannungsmittenpunkt (23) mit dem Phasenausgang (4) zu verbinden ist, der Nullzustand ausgewählt wird, der dem vorangehenden Nullzustand entgegengesetzt ist.

6. Ein Verfahren nach einem der Ansprüche 1-4, **dadurch gekennzeichnet, dass** innerhalb jeder Halbperiode der Grundfrequenzkomponente der Referenzspannung des Phasenausgangs (4) im Wesentlichen zu jeder Zeit, wenn der Gleichspannungsmittenpunkt (23) mit dem Phasenausgang (4) zu verbinden ist, der Nullzustand ausgewählt wird, der dem vorangehenden Nullzustand entgegengesetzt ist.

7. Ein Verfahren nach einem der Ansprüche 1-6, **dadurch gekennzeichnet, dass** die Halbleitergeräte der Einheiten kontrolliert werden, so dass ein Wechsel zwischen den zwei Nullzuständen immer durch eine Verbindung des positiven oder negativen Pols zu dem Phasenausgang separiert wird.

8. Ein Verfahren nach einem der Ansprüche 1-3, **dadurch gekennzeichnet, dass** mindestens einmal während jeder Halbperiode der Grundfrequenzkomponente der Referenzspannung des Phasenausgangs, wenn der Gleichspannungsmittenpunkt (23) mit dem Phasenausgang zu verbinden ist, die Halbleitergeräte sowohl in der zweiten und fünften Einheit (S2, S5) als auch in der dritten und sechsten Einheit (S3, S6) angeschaltet werden, um gleichzeitig beide Nullzustände zu erhalten.

9. Ein Verfahren nach Anspruch 8, **dadurch gekennzeichnet, dass** immer, wenn der Gleichspannungsmittenpunkt (23) mit dem Phasenausgang zu verbinden ist, die Halbleitergeräte sowohl in der zweiten und fünften Einheit (S2, S5) als auch in der dritten und sechsten Einheit (S3, S6) angeschaltet werden, um gleichzeitig beide Nullzustände zu erhalten.

10. Ein Verfahren nach einem der Ansprüche 1-9, **dadurch gekennzeichnet, dass** die Halbleitergeräte der Einheiten kontrolliert werden, so dass ein Wechsel zwischen dem Verbinden des positiven und des negativen Pols mit dem Phasenausgang immer durch eine Verbindung des Gleichspannungsmittenpunkts mit dem Phasenausgang gemäß einem der zwei Nullzustände separiert wird.

11. Ein Verfahren nach Anspruch 10, **dadurch gekennzeichnet, dass** die Halbleitergeräte der Einheiten (S1-S6) kontrolliert werden, zusammen alternativ vier verschiedene Zustände anzunehmen, nämlich einen ersten Zustand zum Verbinden des positiven Pols mit dem Phasenausgang, einen zweiten Zustand zum Verbinden des negativen Pols mit dem Phasenausgang und einen dritten und vierten Zustand zum Verbinden des Gleichspannungsmittenpunkts mit dem Phasenausgang.

12. Ein Verfahren nach Anspruch 11, **dadurch gekennzeichnet, dass** die Halbleitergeräte der ersten (S1) und der sechsten (S6) Einheit kontrollierte werden, immer denselben Zustand anzunehmen, an- oder abgeschaltet, und dass die Halbleitergeräte in der vierten (S4) und fünften (S5) Einheit kontrolliert werden, immer denselben Zustand anzunehmen, an- oder abgeschaltet.

13. Ein Verfahren nach Anspruch 12, **dadurch gekennzeichnet, dass** die Halbleitergeräte der ersten und sechsten Einheit kontrolliert werden, indem das gleiche Kontrollsignal dorthin gesendet wird, und diejenigen der vierten und fünften Einheit kontrolliert werden, indem das gleiche Kontrollsignal dorthin geschickt wird.

14. Ein Verfahren nach einem der Ansprüche 11-13, **dadurch gekennzeichnet, dass** der erste Zustand erhalten wird, indem die Halbleitergeräte in der ersten, zweiten und sechsten Einheit (S1, S2, S6) kontrolliert werden, angeschaltet zu sein, und diejenigen in der dritten, vierten und fünften Einheit (S3, S4, S5) kontrolliert werden, abgeschaltet zu sein, der zweite Zustand, indem die Halbleitergeräte in der dritten, vierten und fünften Einheit kontrolliert werden, angeschaltet zu sein, und diejenigen in der ersten, zweiten und sechsten Einheit kontrolliert werden, abgeschaltet zu sein, der dritte Zustand, indem die Halbleitergeräte in der zweiten, vierten und fünften Einheit kontrolliert werden, angeschaltet zu sein, und diejenigen in der ersten, dritten und sechsten Einheit kontrolliert werden, abgeschaltet zu sein, und der vierte Zustand, indem die Halbleitergeräte in der ersten, dritten und sechsten Einheit kontrolliert werden, angeschaltet zu sein, und diejenigen in der zweiten, vierten und fünften Einheit kontrolliert werden, abgeschaltet zu sein.

15. Ein Verfahren nach einem der Ansprüche 11-14, **dadurch gekennzeichnet, dass** die Halbleitergeräte in der ersten (S1) und der sechsten (S6) Einheit gekoppelt sind bezüglich der Halbleitergeräte in der vierten (S4) und fünften (S5) Einheit, so dass, wenn die Halbleitergeräte von irgendeinem dieser Paare von Einheiten anzuschalten ist, die Halbleitergeräte des anderen Paars zuerst kontrolliert werden, abgeschaltet zu werden.

16. Ein Verfahren nach einem der Ansprüche 11-15, **dadurch gekennzeichnet, dass** die Halbleitergeräte in der zweiten Einheit gekoppelt sind bezüglich der Halbleitergeräte in der dritten Einheit, so dass, wenn die Halbleitergeräte von irgendeiner dieser Einheiten anzuschalten sind, die Halbleitergeräte der entgegengesetzten der zwei Einheiten zuerst kontrolliert werden, abgeschaltet zu werden.

17. Ein Verfahren nach Anspruch 1, **dadurch gekennzeichnet, dass** die Halbleitergeräte der Einheiten kontrolliert werden, zusammen alternativ acht Zustände anzunehmen, nämlich für Zustände gemäß einem ersten Kontrollschema in der Form eines ersten Zustands zum Verbinden des positiven Pols mit dem Phasenausgang, eines zweiten Zustands zum Verbinden des negativen Pols mit dem Phasenausgang und eines dritten (N1) und vierten (N2) Zustands zum Verbinden des Gleichspannungsmittenpunktes (23) mit dem Phasenausgang, sowie vier Zustände gemäß einem zweiten Kontrollschema in der Form eines fünften Zustands zum Verbinden des positiven Pols mit dem Phasenausgang, eines sechsten Zustands zum Verbinden des negativen Pols mit dem Phasenausgang und eines siebten (N1) und achten Zustands (N2) zum Verbinden des Gleichspannungsmittenpunktes mit dem Phasenausgang.

18. Ein Verfahren nach Anspruch 17, **dadurch gekennzeichnet, dass**
• in dem ersten Zustand die Halbleitergeräte in der ersten (S1) und zweiten (S2) Einheit kontrolliert werden, angeschaltet zu werden, und diejenigen in der dritten (S3), vierten (S4), fünften (S5) und sechsten (S6) Einheit, abgeschaltet zu werden,
• in dem zweiten Zustand die Halbleitergeräte in der dritten und vierten Einheit kontrolliert werden, angeschaltet zu werden, und diejenigen in der ersten, zweiten, fünften und sechsten Einheit, abgeschaltet zu werden,
• in dem dritten Zustand die Halbleitergeräte in der zweiten und fünften Einheit kontrolliert werden, angeschaltet zu werden, und diejenigen in der ersten, dritten, vierten und sechsten Einheit, abgeschaltet zu werden,
• in dem vierten Zustand die Halbleitergeräte in der dritten und sechsten Einheit kontrolliert werden, angeschaltet zu werden, und diejenigen in der ersten, zweiten, vierten und fünften Einheit, abgeschaltet zu werden,
• in dem fünften Zustand die Halbleitergeräte in der ersten, zweiten und sechsten Einheit kontrolliert werden, angeschaltet zu werden, und diejenigen in der dritten, vierten und fünften Einheit, abgeschaltet zu werden,
• in dem sechsten Zustand die Halbleitergeräte in der dritten, vierten und fünften Einheit kontrolliert werden, angeschaltet zu werden, und diejenigen in der ersten, zweiten und sechsten Einheit, abgeschaltet zu werden,
• in dem siebten Zustand die Halbleitergeräte in der ersten, dritten und sechsten Einheit kontrolliert werden, angeschaltet zu werden, und diejenigen in der zweiten, vierten und fünften Einheit, abgeschaltet zu werden, und
• in dem achten Zustand die Halbleitergeräte in der zweiten, vierten und fünften Einheit kontrolliert werden, angeschaltet zu werden, und diejenigen in der ersten, dritten und sechsten Einheit, abgeschaltet zu werden.

19. Ein Verfahren nach einem der Ansprüche 8-18, **dadurch gekennzeichnet, dass** während einer ersten Zeitperiode (T1), die auf beiden Seiten eines Nulldurchgangs (0) der Grundfrequenzkomponente des Phasenstroms (I) an dem Phasenausgang (4) liegt, Wechsel zwischen einer Verbindung des positiven beziehungsweise des negativen Pols mit dem Phasenausgang und eines Nullzustands davon ausgeführt werden, so dass eine große Stromkommutierungsschleife erhalten wird, und dass während einer zweiten Zeitperiode (T2) zwischen solchen ersten Zeitperioden mit einem höheren Absolutwert des Phasenstroms die zuletztgenannten Wechsel so ausgeführt werden, dass eine kleine Stromkommutierungsschleife erhalten wird.

20. Ein Verfahren nach Anspruch 19, **dadurch gekennzeichnet, dass** in einem Gleichrichter- oder Invertiererbetrieb des Konverters die erste Periode (T1) ausgewählt wird, sich über einen Phasenwinkel der Grundfrequenzkomponente des Phasenstroms von 50-65° zu erstrecken, vorzugsweise 55-60°, auf jeder Seite des Nulldurchgangs.

21. Ein Verfahren nach Anspruch 19, **dadurch gekennzeichnet, dass** beim Betrieb des Konverters zum Transferieren von hauptsächlich Blindleistung die erste Periode (T1) ausgewählt wird, sich über einen Phasenwinkel der Grundfrequenzkomponente des Phasenstroms von 25-40° zu erstrecken, vorzugsweise 30-35°, auf jeder Seite des Nulldurchgangs.

22. Ein Verfahren nach Anspruch 11 und 19, **dadurch gekennzeichnet, dass** während der ersten Zeitperiode (T1) zwischen dem ersten und vierten Zustand gewechselt wird, wenn die Referenzspannung des Phasenausgangs positiv ist, und zwischen dem zweiten und dritten Zustand, wenn die Referenzspannung des Phasenausgangs negativ ist, und dass während der zweiten Zeitperiode (T2) zwischen dem ersten und dritten Zustand gewechselt wird, wenn die Referenzspannung des Phasenausgangs positiv ist, und zwischen dem zweiten und vierten Zustand, wenn die Referenzspannung des Phasenausgangs negativ ist.

23. Ein Verfahren nach Anspruch 18 und 19, **dadurch gekennzeichnet, dass** während der ersten Zeitperiode (T1) das zweite Kontrollschema ausgewählt wird, gemäß welchem zwischen dem fünften, sechsten, siebten und achten Zustand gewechselt wird, indem zwischen dem fünften und sechsten Zustand gewechselt wird, wenn der Phasenstrom positiv ist, und indem zwischen dem sechsten und achten Zustand gewechselt wird, wenn der Phasenstrom negativ ist, und dass während der zweiten Zeitperiode (T2) das erste Kontrollschema ausgewählt wird, gemäß welchem zwischen dem ersten, zweiten, dritten und vierten Zustand gewechselt wird, indem zwischen dem ersten und dritten Zustand gewechselt wird, wenn der Phasenstrom positiv ist, und zwischen dem zweiten und vierten Zustand, wenn der Phasenstrom negativ ist.

24. Ein Verfahren nach einem der vorhergehenden Ansprüche, **dadurch gekennzeichnet, dass** es Halbleitergeräte (13-16, 10, 11) in Form von IGBTs (Bipolartransistoren mit isolierter Gate-Elektrode) oder GTOs (GTO-Thyristoren) sind, die kontrolliert werden, an- oder abgeschaltet zu werden.

25. Ein VSC-Konverter zum Konvertieren von Wechselspannung in Gleichspannung und umgekehrt, wobei der Konverter umfasst:
• eine Reihenverbindung von vier Einheiten (S1-S4), die zwischen zwei Polen, einem positiven (7) und einem negativen (8), der Gleichspannungsseite des Konverters angeordnet sind, wobei jede Einheit ein Halbleitergerät (13-16) des Abschalttyps und eine damit antiparallel verbundene Diode (17-20) umfasst, wobei den Einheiten eine Ordnungszahl gemäß ihrer Reihenfolge in der Reihenschaltung vom positiven (7) zum negativen (8) Pol gegeben wird,
• eine Wechselspannungsphasenleitung, die mit einem ersten Mittenpunkt, genannt Phasenausgang (4), der Reihenschaltung zwischen der zweiten (S2) und dritten (S3) Einheit verbunden ist,
• Mittel (9), eingerichtet um einen Gleichspannungsmittenpunkt (23) auf der Gleichspannungsseite zwischen den zwei Polen bereitzustellen und um diese Pole auf dieselbe Spannung aber mit unterschiedlichen Vorzeichen bezüglich des Gleichspannungsmittenpunktes (23) zu legen,
wobei in dem Konverter
• ein zweiter Mittenpunkt (24) der Reihenverbindung, angeordnet zwischen der ersten (S1) und der zweiten (S2) Einheit, mit dem Gleichspannungsmittenpunkt (23) durch eine fünfte Einheit (S5) verbunden ist, die eine Diode (26) mit Leitrichtung bezüglich des Phasenausgangs (4) entgegengesetzt zu der Leitrichtung der Diode der zweiten Einheit hat, und
• ein dritter Mittenpunkt (27) der Reihenverbindung, angeordnet zwischen der dritten (S3) und der vierten (S4) Einheit, mit dem Gleichspannungsmittenpunkt (23) durch eine sechste Einheit (S6) verbunden ist, die eine Diode (29) mit Leitrichtung bezüglich des Phasenausgangs (4) entgegengesetzt zu der Leitrichtung der Diode der dritten Einheit (S3) hat,
wobei der Konverter auch eine Anordnung (30) umfasst, die eingerichtet ist, die Halbleitergeräte der Einheiten (S1-S6) zu kontrollieren, um an- und abgeschaltet zu werden, damit die Wechselspannungsphasenleitung alternativ mit dem Gleichspannungsmittenpunkt (23), dem positiven Pol (7) und dem negativen Pol (8) verbunden wird, um einen Zug von Pulsen mit vorbestimmten Amplituden gemäß einem Pulsbreitenmodulationsmuster auf dem Phasenausgang (4) zu erzeugen, und
wobei der Gleichspannungsmittenpunkt (23) mit dem Phasenausgang (4) durch zwei verschiedene sogenannte Nullzustände verbindbar ist, nämlich einen ersten Nullzustand, in welchem die zweite (S2) und die fünfte Einheit (S5) im leitenden Zustand sind, und einen zweiten Nullzustand, in welchem die dritte (S3) und die sechste (S6) Einheit im leitenden Zustand sind, **dadurch gekennzeichnet, dass** die Anordnung (30) eingerichtet ist, die Halbleitergeräte der Einheiten (S1-S6) zu kontrollieren, so dass jeder der beiden Nullzustände mindestens einmal angenommen wird während einer Halbperiode, während welcher die Grundfrequenzkomponente einer Referenzspannung des Phasenausgangs (4) positiv oder negativ ist.

26. Ein VSC-Konverter nach Anspruch 25, **dadurch gekennzeichnet, dass** die Anordnung (30) eingerichtet ist, die Halbleitergeräte der Einheiten (S1-S6) gemäß einem der Ansprüche 2-24 zu kontrollieren.

27. Ein Apparat zum Kontrollieren der Halbleitergeräte der Einheiten (S1-S6) eines VSC-Konverters von Anspruch 25 oder 26, wobei der Apparat ein Programmmodul umfasst, das mindestens einen Prozessor umfasst, der eingerichtet ist, Programmanweisungen auszuführen, um die Halbleitergeräte der Einheiten gemäß dem Verfahren nach einem der Ansprüche 1-24 zu kontrollieren.

## Revendications

1. Procédé de commande d'un convertisseur VSC pour convertir une tension alternative en une tension continue et inversement, ledit convertisseur comprenant :
• une connexion série de quatre unités (S1-S4) placées entre deux pôles, un positif (7) et un négatif (8), du côté continu du convertisseur, chaque unité comprenant un dispositif semiconducteur du type à extinction (13-16) et une diode (17-20) connectée en antiparallèle avec ce dernier, les unités recevant un numéro d'ordre selon leur ordre dans la connexion série, du pôle positif (7) au pôle négatif (8),
• une ligne de phase alternative connectée à un premier point médian, appelé sortie de phase (4), de la connexion série entre la deuxième (S2) et la troisième (S3) unités,
• un moyen (9) adapté pour fournir un point médian de courant continu (23) sur ledit côté continu entre les deux pôles et pour mettre ces pôles sur la même tension mais avec des signes opposés par rapport au point médian de courant continu (23),
dans lequel convertisseur :
• un deuxième point médian (24), situé entre les première (S1) et deuxième (S2) unités, est connecté au point médian de courant continu (23) par l'intermédiaire d'une cinquième unité (S5) comportant une diode (26) dont le sens de conduction par rapport à la sortie de phase (4) est opposé au sens de conduction de la diode de la deuxième unité (S2) et
• un troisième point médian (27), situé entre les troisième (S3) et quatrième (S4) unités, est connecté au point médian de courant continu (23) par l'intermédiaire d'une sixième unité (S6) comportant une diode (29) dont le sens de conduction par rapport à la sortie de phase (4) est opposé à celui de la diode de la troisième unité (S3),
dans lequel convertisseur les dispositifs semiconducteurs des unités (S1-S6) sont commandés pour être rendus passants et bloqués de telle manière que la ligne de phase alternative est alternativement connectée au point médian de courant continu (23), au pôle positif (7) et au pôle négatif (8) pour générer un train d'impulsions ayant des amplitudes déterminées selon un motif de modulation de largeur d'impulsions sur la sortie de phase (4) du convertisseur,
dans lequel le point médian de courant continu (23) peut être connecté à la sortie de phase (4) à travers deux états différents dits états zéro, à savoir un premier état zéro dans lequel les deuxième (S2) et cinquième (S5) unités sont dans l'état conducteur, et un deuxième état zéro dans lequel les troisième (S3) et sixième (S6) unités sont dans l'état conducteur,
**caractérisé en ce que** les dispositifs semiconducteurs des unités (S1-S6) sont commandés de telle manière que chacun des deux états zéro est pris au moins une fois au cours d'une demi période pendant laquelle la composante de fréquence fondamentale d'une tension de référence de la sortie de phase (4) est positive ou négative.

2. Procédé selon la revendication 1, **caractérisé en ce que** les dispositifs semiconducteurs des unités (S1-S6) sont commandés pour obtenir lesdites connexions alternatives à la sortie de phase (4) selon un motif qui, en fonctionnement en redresseur ou en onduleur, répartit les pertes de commutation de façon sensiblement uniforme sur les dispositifs semiconducteurs du type à extinction d'au moins quatre des six unités.

3. Procédé selon la revendication 1, **caractérisé en ce que** les dispositifs semiconducteurs des unités (S1-S6) sont commandés pour obtenir lesdites connexions alternatives à la sortie de phase (4) selon un motif qui, en fonctionnement en redresseur ou en onduleur, répartit la somme des pertes de commutation et de conduction de façon sensiblement uniforme sur les dispositifs semiconducteurs du type à extinction d'au moins quatre des six unités.

4. Procédé selon la revendication 1, **caractérisé en ce que** les dispositifs semiconducteurs des unités (S1-S6) sont commandés pour obtenir lesdites connexions alternatives à la sortie de phase (4) selon un motif qui, en fonctionnement réactif, est destiné à réduire la somme des pertes de commutation et de conduction dans le dispositif semiconducteur du type à extinction des deuxième et troisième unités.

5. Procédé selon l'une quelconque des revendications 1 à 4, **caractérisé en ce que,** dans chacune des demi périodes de la composante de fréquence fondamentale de la tension de référence de la sortie de phase (4), plus d'un tiers des fois où le point médian de courant continu (23) doit être connecté à la sortie de phase (4), l'état zéro qui est opposé au précédent état zéro est sélectionné.

6. Procédé selon l'une quelconque des revendications 1 à 4, **caractérisé en ce que,** dans chacune des demi périodes de la composante de fréquence fondamentale de la tension de référence de la sortie de phase (4), substantiellement chaque fois que le point médian de courant continu (23) doit être connecté à la sortie de phase (4), l'état zéro qui est opposé au précédent état zéro est sélectionné.

7. Procédé selon l'une quelconque des revendications 1 à 6, **caractérisé en ce que** les dispositifs semiconducteurs des unités sont commandés de telle manière qu'un changement entre les deux états zéro est toujours séparé par une connexion du pôle positif ou négatif à la sortie de phase.

8. Procédé selon l'une quelconque des revendications 1 à 3, **caractérisé en ce que** au moins une fois au cours de chacune desdites demi périodes de la composante de fréquence fondamentale de la tension de référence de la sortie de phase quand le point médian de courant continu (23) doit être connecté à la sortie de phase, les dispositifs semiconducteurs des deuxième et cinquième unités (S2, 1S5) ainsi que ceux des troisième et sixième unités (S3, S6) sont rendus passants pour obtenir simultanément les deux états zéro.

9. Procédé selon la revendication 8, **caractérisé en ce que,** à chaque fois que le point médian de courant continu (23) doit être connecté à la sortie de phase, les dispositifs semiconducteurs des deuxième et cinquième unités (S2, S5) ainsi que ceux des troisième et sixième unités (S3, S6) sont rendus passants pour obtenir simultanément les deux états zéro.

10. Procédé selon l'une quelconque des revendications 1 à 9, **caractérisé en ce que** les dispositifs semiconducteurs des unités sont commandés de telle manière qu'un changement entre la connexion des pôles positif et négatif à la sortie de phase est toujours séparé par une connexion du point médian de courant continu à la sortie de phase selon l'un des états zéro.

11. Procédé selon la revendication 10, **caractérisé en ce que** les dispositifs semiconducteurs des unités (S1-S6) sont commandés pour prendre ensemble alternativement quatre états différents, à savoir un premier état pour connecter le pôle positif à la sortie de phase, un deuxième état pour connecter le pôle négatif à la sortie de phase et un troisième et quatrième état pour connecter le point médian de courant continu à la sortie de phase.

12. Procédé selon la revendication 11, **caractérisé en ce que** les dispositifs semiconducteurs des première (S1) et sixième (S6) unités sont commandés pour toujours prendre le même état, passant ou bloqué, et **en ce que** les dispositifs semiconducteurs des quatrième (S4) et cinquième (S5) unités sont commandés pour toujours prendre le même état, passant ou bloqué.

13. Procédé selon la revendication 12, **caractérisé en ce que** les dispositifs semiconducteurs des première et sixième unités sont commandés en leur envoyant le même signal de commande, et ceux des quatrième et cinquième unités sont commandés en leur envoyant le même signal de commande.

14. Procédé selon l'une quelconque des revendications 11 à 13, **caractérisé en ce que** le premier état est obtenu en commandant les dispositifs semiconducteurs des première, deuxième et sixième unités (S1, S2, S6) pour les rendre passants et ceux des troisième, quatrième et cinquième unités (S3, S4, S5) pour les rendre bloqués, le deuxième état en commandant les dispositifs semiconducteurs des troisième, quatrième et cinquième unités pour les rendre passants et ceux des première, deuxième et sixième unités pour les rendre bloqués, le troisième état en commandant les dispositifs semiconducteurs des deuxième, quatrième et cinquième unités pour les rendre passants et ceux des première, troisième et sixième unités pour les rendre bloqués, et le quatrième état en commandant les dispositifs semiconducteurs des première, troisième et sixième unités pour les rendre passants et ceux des deuxième, quatrième et cinquième unités pour les rendre bloqués.

15. Procédé selon l'une quelconque des revendications 11 à 14, **caractérisé en ce que** les dispositifs semiconducteurs des première (S1) et sixième (S6) unités sont verrouillés par rapport aux dispositifs semiconducteurs des quatrième (S4) et cinquième (S5) unités, de sorte que lorsque les dispositifs semiconducteurs de n'importe lequel de ces couples d'unités doivent être rendus passants, les dispositifs semiconducteurs de l'autre couple d'unités sont d'abord commandés pour être rendus bloqués.

16. Procédé selon l'une quelconque des revendications 11 à 15, **caractérisé en ce que** les dispositifs semiconducteurs de la deuxième unité (S2) sont verrouillés par rapport aux dispositifs semiconducteurs de la troisième unité (S3), de sorte que lorsque les dispositifs semiconducteurs de n'importe laquelle de ces unités doivent être rendus passants, les dispositifs semiconducteurs de l'unité opposée sont d'abord commandés pour être rendus bloqués.

17. Procédé selon la revendication 1, **caractérisé en ce que** les dispositifs semiconducteurs des unités sont commandés pour prendre ensemble alternativement huit états différents, à savoir quatre états selon un premier programme de commande sous la forme d'un premier état pour connecter le pôle positif à la sortie de phase, un deuxième état pour connecter le pôle négatif à la sortie de phase et un troisième (N1) et un quatrième (N2) état pour connecter le point médian de courant continu (23) à la sortie de phase, ainsi que quatre états selon un deuxième programme de commande sous la forme d'un cinquième état pour connecter le pôle positif à la sortie de phase, un sixième état pour connecter le pôle négatif à la sortie de phase et un septième (N1) et un huitième (N2) état pour connecter le point médian de courant continu à la sortie de phase.

18. Procédé selon la revendication 17, **caractérisé en ce que :**
• dans le premier état, les dispositifs semiconducteurs sont commandés dans les première (S1) et deuxième (S2) unités pour être rendus passants et ceux des troisième (S3), quatrième (S4), cinquième (S5) et sixième (S6) unités pour être rendus bloqués,
• dans le deuxième état, les dispositifs semiconducteurs sont commandés dans les troisième et quatrième unités pour être rendus passants et ceux des première, deuxième, cinquième et sixième unités pour être rendus bloqués,
• dans le troisième état, les dispositifs semiconducteurs sont commandés dans les deuxième et cinquième unités pour être rendus passants et ceux des première, troisième, quatrième et sixième unités pour être rendus bloqués,
• dans le quatrième état, les dispositifs semiconducteurs sont commandés dans les troisième et sixième unités pour être rendus passants et ceux des première, deuxième, quatrième et cinquième unités pour être rendus bloqués,
• dans le cinquième état, les dispositifs semiconducteurs sont commandés dans les première, deuxième et sixième unités pour être rendus passants et ceux des troisième, quatrième et cinquième unités pour être rendus bloqués,
• dans le sixième état, les dispositifs semiconducteurs sont commandés dans les troisième, quatrième et cinquième unités pour être rendus passants et ceux des première, deuxième et sixième unités pour être rendus bloqués,
• dans le septième état, les dispositifs semiconducteurs sont commandés dans les première, troisième et sixième unités pour être rendus passants et ceux des deuxième, quatrième et cinquième unités pour être rendus bloqués, et
• dans le huitième état, les dispositifs semiconducteurs sont commandés dans les deuxième, quatrième et cinquième unités pour être rendus passants et ceux des première, troisième et sixième unités pour être rendus bloqués.

19. Procédé selon l'une quelconque des revendications 8 à 18, **caractérisé en ce que,** pendant un premier intervalle de temps (T1) situé de chaque côté d'un passage par zéro (0) de la composante de fréquence fondamentale du courant de phase (I) sur la sortie de phase (4), les changements respectivement entre la connexion du pôle positif et du pôle négatif à la sortie de phase et un état zéro de ceux-ci sont exécutés de telle manière qu'une grande boucle de commutation de courant est obtenue, et pendant un deuxième intervalle de temps (T2) entre ces intervalles de temps ayant une plus grande valeur absolue du courant de phase, les changements mentionnés sont exécutés de telle manière qu'une petite boucle de commutation de courant est obtenue.

20. Procédé selon la revendication 19, **caractérisé en ce que** dans un fonctionnement en redresseur ou en onduleur du convertisseur, le premier intervalle (T1) est choisi pour s'étendre sur un angle de phase de la composante de fréquence fondamentale du courant de phase de 50 à 65°, de préférence de 55 à 60°, de chaque côté dudit passage par zéro.

21. Procédé selon la revendication 19, **caractérisé en ce que** dans un fonctionnement du convertisseur pour transférer principalement la puissance réactive, le premier intervalle (T1) est choisi pour s'étendre sur un angle de phase de la composante de fréquence fondamentale du courant de phase de 25 à 40°, de préférence de 30 à 35°, de chaque côté dudit passage par zéro.

22. Procédé selon les revendications 11 et 19, **caractérisé en ce que** pendant le premier intervalle de temps (T1), on effectue un changement entre les premier et quatrième états quand la tension de référence de la sortie de phase est positive et entre les deuxième et troisième états quand la tension de référence de la sortie de phase est négative, et pendant le deuxième intervalle de temps (T2), on effectue un changement entre les premier et troisième états quand la tension de référence de la sortie de phase est positive et entre les deuxième et quatrième états quand la tension de référence de la sortie de phase est négative.

23. Procédé selon les revendications 18 et 19, **caractérisé en ce que** pendant le premier intervalle de temps (T1), le deuxième programme de commande est sélectionné, selon lequel on effectue un changement entre les cinquième, sixième, septième et huitième états par un changement entre les cinquième et septième états quand le courant de phase est positif et par un changement entre les sixième et huitième états quand le courant de phase est négatif, et pendant le deuxième intervalle de temps (T2), le premier programme de commande est sélectionné, selon lequel on effectue un changement entre les premier, deuxième, troisième et quatrième états par un changement entre les premier et troisième états quand le courant de phase est positif et par un changement entre les deuxième et quatrième états quand le courant de phase est négatif.

24. Procédé selon l'une quelconque des revendications précédentes, **caractérisé en ce que** ce sont des dispositifs semiconducteurs (13-16, 10, 11) sous la forme d'IGBT (transistors bipolaires à porte isolée) ou de thyristors GTO (thyristors blocables par la gâchette) qui sont commandés pour être rendus passants et bloqués.

25. Convertisseur VSC pour convertir une tension alternative en une tension continue et inversement, comprenant :
• une connexion série de quatre unités (S1-S4) placées entre deux pôles, un positif (7) et un négatif (8), du côté continu du convertisseur, chaque unité comprenant un dispositif semiconducteur (13-16) du type à extinction et une diode (17-20) connectée en antiparallèle avec ce dernier, les unités recevant un numéro d'ordre selon leur ordre dans la connexion série, du pôle positif (7) au pôle négatif (8),
• une ligne de phase alternative connectée à un premier point médian, appelé sortie de phase (4), de la connexion série entre la deuxième (S2) et la troisième (S3) unités,
• un moyen (9) adapté pour fournir un point médian de courant continu (23) sur ledit côté continu entre les deux pôles et pour mettre ces pôles sur la même tension mais avec des signes opposés par rapport au point médian de courant continu (23),
dans lequel convertisseur :
• un deuxième point médian (24) de la connexion série, situé entre les première (S1) et deuxième (S2) unités, est connecté au point médian de courant continu (23) par l'intermédiaire d'une cinquième unité (S5) comportant une diode (26) dont le sens de conduction par rapport à la sortie de phase (4) est opposé au sens de conduction de la diode de la deuxième unité, et
• un troisième point médian (27) de la connexion série, situé entre les troisième (S3) et quatrième (S4) unités, est connecté au point médian de courant continu (23) par l'intermédiaire d'une sixième unité (S6) comportant une diode dont le sens de conduction par rapport à la sortie de phase (4) est opposé à celui de la diode de la troisième unité (S3),
dans lequel le convertisseur comprend aussi un dispositif (30) adapté pour commander les dispositifs semiconducteurs des unités (S1-S6) pour les rendre passants et bloqués pour connecter alternativement la ligne de phase alternative au point médian de courant continu (23), au pôle positif (7) et au pôle négatif (8) pour générer un train d'impulsions ayant des amplitudes déterminées selon un motif de modulation de largeur d'impulsions sur ladite sortie de phase (4) du convertisseur, et
dans lequel le point médian de courant continu (23) peut être connecté à la sortie de phase (4) à travers deux états différents dits états zéro, à savoir un premier état zéro dans lequel les deuxième (S2) et cinquième (S5) unités sont dans l'état conducteur, et un deuxième état zéro dans lequel les troisième (S3) et sixième (S6) unités sont dans l'état conducteur,
**caractérisé en ce que** le dispositif (30) est adapté pour commander les dispositifs semiconducteurs des unités (S1-S6) de telle manière que chacun des deux états zéro est pris au moins une fois au cours d'une demi période pendant laquelle la composante de fréquence fondamentale d'une tension de référence de la sortie de phase (4) est positive ou négative.

26. Convertisseur VSC selon la revendication 25, **caractérisé en ce que** le dispositif (30) est adapté pour commander les dispositifs semiconducteurs des unités (S1-S6) selon l'une quelconque des revendications 2 à 24.

27. Appareil pour commander les dispositifs semiconducteurs des unités (S1-S6) d'un convertisseur VSC selon la revendication 25 ou 26, lequel appareil comprend un module de programme comprenant au moins un processeur adapté pour exécuter des instructions de programme pour commander les dispositifs semiconducteurs des unités selon le procédé de l'une quelconque des revendications 1 à 24.
